**Europäisches Patentamt**

**European Patent Office**

**Office européen des brevets**

(11) Veröffentlichungsnummer : **0 011 775**
**B1**

(12) **EUROPÄISCHE PATENTSCHRIFT**

(45) Veröffentlichungstag der Patentschrift :
**11.11.81**

(21) Anmeldenummer : **79104504.0**

(22) Anmeldetag : **15.11.79**

(51) Int. Cl.³ : **B 60 K 3/04**, **F 41 H 7/02**

(54) **Antriebseinheit für Landfahrzeuge.**

(30) Priorität : **04.12.78 DE 2852411**

(43) Veröffentlichungstag der Anmeldung :
**11.06.80 (Patentblatt 80/12)**

(45) Bekanntmachung des Hinweises auf die Patenterteilung : **11.11.81 Patentblatt 81/45**

(84) Benannte Vertragsstaaten :
**BE FR GB NL**

(56) Entgegenhaltungen :
**FR - A - 1 250 244**
**US - A - 3 446 306**

(73) Patentinhaber : **Klöckner-Humboldt-Deutz Aktiengesellschaft**
**Deutz-Mülhelmer-Strasse 111 Postfach 80 05 09**
**D-5000 Köln 80 (DE)**

(72) Erfinder : **Brockmann, Heinz**
**Holzweg 25**
**D-6380 Bad Homburg (DE)**

Imprimerie Jouve, 17, rue du Louvre, 75001 Paris, France

## Antriebseinheit für Landfahrzeuge

Die Erfindung bezieht sich auf eine Antriebseinheit für Landfahrzeuge, insbesondere allseits gepanzerte Kettenfahrzeuge, mit einer Gasturbine, bestehend aus einem Gasgenerator und einer nachgeschalteten Nutzturbine, welche mechanisch über eine Antriebsverbindung auf das Fahr- und Lenkgetriebe wirkt, wobei die Gasturbine in Richtung der Fahrzeuglängsachse angeordnet ist, die Lufteinlaßstutzen nahe an der Oberwand und der Abgasauslaßstutzen nahe an der Heckwand des Fahrzeugs vorgesehen sind und der Gasgenerator eine Antriebsverbindung zu den in dem Fahr- und Lenkgetriebe angeordneten Hilfsaggregaten aufweist.

Insbesondere bei allseits gepanzerten Landfahrzeugen wird gefordert, daß deren Baugröße relativ klein ist bzw. daß bei vorgegebener Baugröße möglichst viele, militärischen Zwecken dienende Einrichtungen untergebracht werden können.

Hierzu ist es beispielsweise aus der US-A 3 446 306 bekannt, bei einem Radfahrzeug eine Gasturbine mit koaxial angeordnetem Getriebe in Richtung der Fahrzeuglängsachse anzuordnen. Hierbei sind die Lufteinlaßstutzen nahe an der Oberwand und der Abgasauslaßstutzen nahe an der Heckwand des Fahrzeugs vorgesehen. In das Getriebe führen zwei koaxial angeordnete Antriebswellen, von denen die eine mit dem Gasgenerator und die andere mit der Nutzturbine der Gasturbine gekoppelt sind. Der erste Antrieb dient zum Antreiben der im Getriebe angeordneten Hilfsaggregate, während der zweite der eigentliche Fahrantrieb ist. Aufgrund der koaxialen Anordnung der Gasturbine und des Getriebes ergibt sich eine relativ große axiale Baulänge. Zudem bedingt dieser Anordnung eine komplizierte Lagerung der beiden zum Getriebe führenden und mit unterschiedlichen Drehzahlen umlaufender koaxialen Wellen. Eine derartige Anordnung mag noch bei Fahrzeugen für den zivilen Sektor ausreichend zuverlässig sein, jedoch nicht für Fahrzeuge, die auf dem militärischen Sektor eingesetzt werden. Zudem ist — wie die weiterhin bekannt gewordene FR-A 12 50 244 zeigt — die Getriebeeinheit bei Kettenfahrzeugen wesentlich größer ausgebildet, so daß ein sehr größer, nicht zur Verfügung stehender Bauraum für die Antriebseinheit benötigt wird.

Die FR-A 12 50 244 löst das Raumproblem bei Kettenfahrzeugen dadurch, daß sie die Gasturbine oberhalb des Getriebes anordnet und beide quer zur Fahrzeuglängsachse einbaut. Hierbei kann jedoch nur ein einziger Antrieb von der Nutzturbine des Gasturbinensatzes zum Getriebe vorgesehen werden. Die Hilfsaggregate müssen deshalb ebenfalls von dieser einzigen Verbindung aus angetrieben werden.

Aufgabe der hier vorliegenden Erfindung ist es, eine Anordnung der Antriebseinrichtung für ein Landfahrzeug vorzuschlagen, die möglichst kleinbauend ist, aber trotzdem robust genug, um im militärischen Bereich Anwendung zu finden und mit der ein separater Antrieb des Lenk- und Fahrgetriebes einerseits und der Hilfsaggregate andererseits möglich ist.

Diese Aufgabe wird erfindungsgemäß dadurch gelöst, daß das Getriebe unterhalb der Gasturbine quer zur Fahrzeuglängsachse angeordnet ist, und daß die Antriebsverbindung des Gasgenerators unter Zwischenschaltung einer Kupplung auf dem vorderseitigen Ende des Fahr- und Lenkgetriebes, während die Antriebsverbindung der Nutzturbine auf dem heckseitigen Ende des Fahr- und Lenkgetriebes angeordnet ist.

Durch die erfindungsgemäße Ausbildung werden die an sich bekannten Vorteile einer Gasturbine, wie hohe Leistung bei kleinen Abmessungen, geringe abzukühlende Ölwärme des Motors und nicht so große notwendige Reinheit der angesaugten Verbrennungsluft wie bei einem Kolbenmotor, mit den Erfordernissen im Fahrzeugbau, hohe Leistungsdichte bezogen auf den verwendeten Raum, vereinigt. Da die Gasturbine eine größere axiale Länge als die Breite des Fahr- und Lenkgetriebes aufweist, können die beiden separaten Antriebe raumsparend jeweils auf dem kürzesten Wege in das Fahr- und Lenkgetriebe eingeleitet werden. Dadurch entfällt die aufwendige Konstruktion von zwei koaxial zueinander angeordneten Antriebswellen.

Durch die Weiterbildung gemäß Anspruch 2, nämlich die Gasturbinenlängsachse außermittig zur Fahrzeuglängsachse anzuordnen, wird der Vorteil erreicht, daß neben der Gasturbine genügend Platz vorhanden ist, um die notwendige Ölkühlanlage ebenfalls oberhalb des Getriebes anzuordnen. Damit wird ein äußerst kompakte Antriebseinrichtung geschaffen, die gegenüber herkömmlichen Antriebseinrichtungen einen wesentlich geringeren Raumbedarf aufweist.

Wird eine Kupplung zwischen der Gasgenerator und der Nutzturbine angeordnet, so ist es möglich die Hilfsaggregate unabhängig von dem Fahrantrieb zu betreiben. Dies senkt die Brennstoffkosten. Eine derartige Möglichkeit ist bei der Anordnung gemäß der FR-A 12 50 244 unmöglich.

Im folgenden wird die Erfindung anhand eines ausgewählten Beispiels näher beschrieben.

Es stellen dar :

Fig. 1 einen Längsschnitt durch den Motorraum eines Kettenfahrzeugs ;

Fig. 2 eine Draufsicht auf den Motorraum nach Fig. 1 ;

Fig. 3 einen Querschnitt durch den Motorraum nach Fig. 1 ;

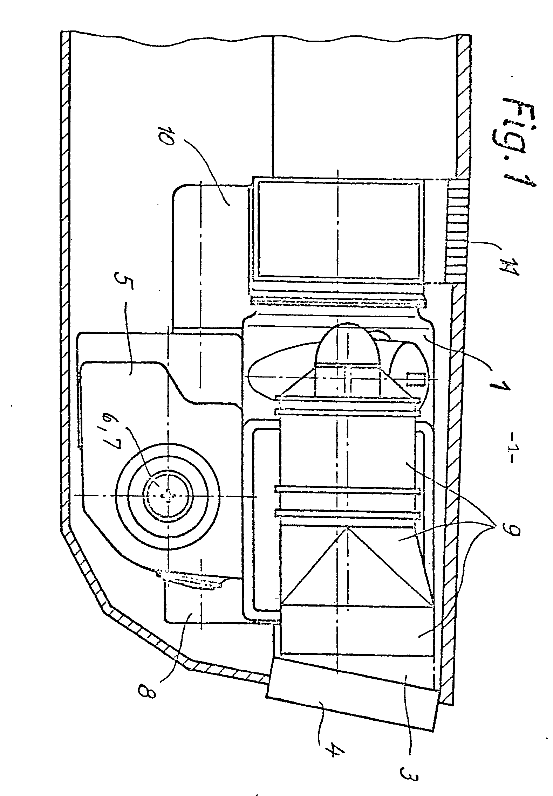

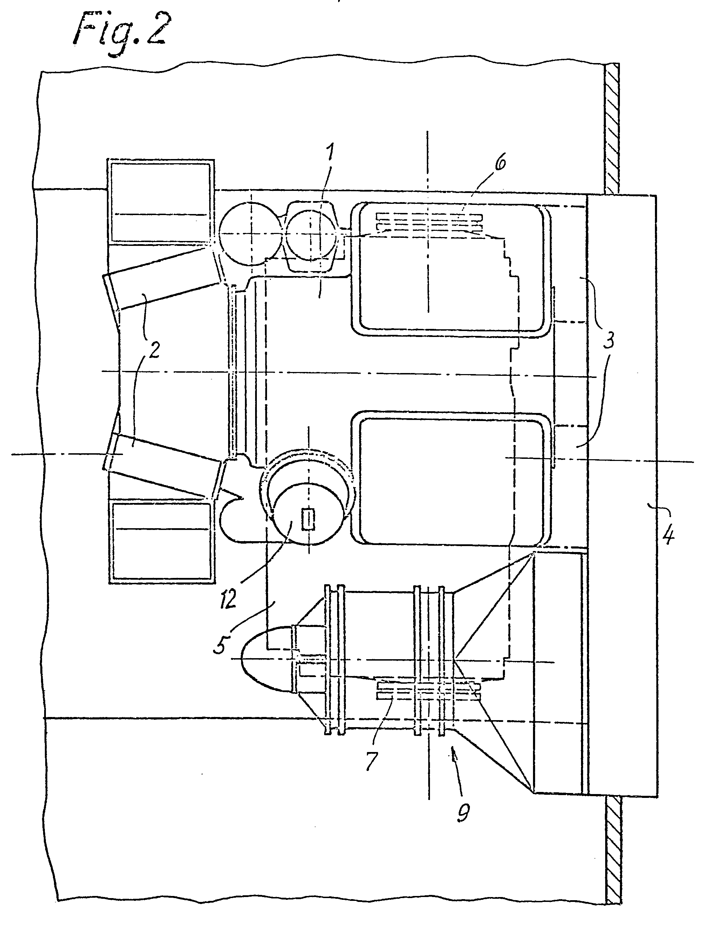

In Fig. 1 ist die Antriebseinheit eines Panzers schematisch sichtbar. Sie besteht aus einer Gasturbine 1, die einen Gasgenerator und eine Arbeitsturbine aufweist, eine Ölkühlanlage 9, ein Fahr- und Lenkgetriebe 5 mit den Antriebswellen 6 bzw. 7 sowie einen Antrieb 8 zwischen der Arbeitsturbine und dem Fahr- und Lenkgetriebe 5. Der Turbinensatz 1 ist erfindungsgemäß über dem Fahr- und Lenkgetreibe 5 angeordnet. Der Verdichter der Gasturbine 1 erhält seine Frischluft durch die auf der Fahrzeugoberfläche angeordneten Öffnungen 11 (Fig. 1). Die angesaugte Frischluft gelangt zuerst in die beiden Luftfilter 2 (fig. 2), die als Zyklon bzw. Doppelzyklonfilter ausgebildet sein können, und dann in den Verdichter.

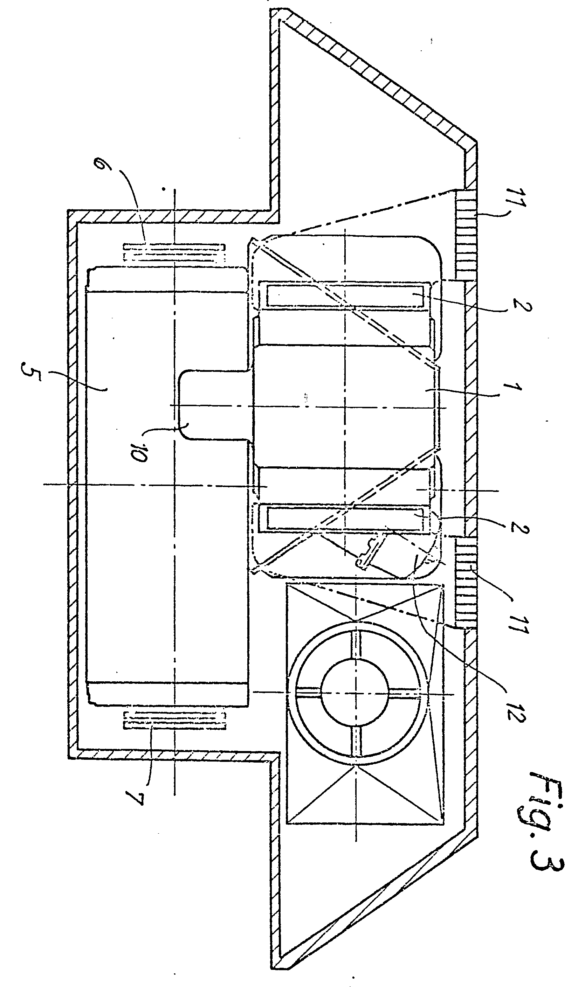

Anschließend wird die angesaugte Luft von dem Verdichter zu einem Wärmetauscher geführt, dessen Abgasöffnung 3 in Fig. 2 dargestellt ist, von dort zu einer Brennkammer 12, durch die Gasgeneratorturbine zu der Arbeitsturbine und von dort durch den Wärmetauscher über dessen Abgasöffnung durch die Heckwand 4 ins Freie. Von der Arbeitsturbine, welche am heckseitigen Ende der Antriebseinheit angeordnet ist, wird über ein Stirnradgetriebe eine Antriebsverbindung, deren Gehäuse 8 in Fig. 1 und 3 dargestellt ist, in das unten liegende Fahr- und Lenkgetriebe 5 geschaffen.

Eine weitere Antriebsverbindung, die in dem Gehäuse 10 angeordnet ist, führt von dem Gasgenerator ebenfalls in das Fahr- und Lenkgetriebe 5, um die dort vorgesehenen Hilfsaggregate, wie z.B. Stromversorgung, Lenk- und Schalthilfspumpen etc., anzutreiben. In diesem Fall ist es sinnvoll, zwischen der Arbeitsturbine und dem Gasgenerator eine schaltbare Kupplung anzuordnen. Durch die Aufspaltung in Arbeitsturbine und Gasgenerator können die Hilfsaggregate unabhängig von dem Fahrbetrieb (Arbeitsturbine) betrieben werden.

Wenn der Turbinensatz 1 außermittig zur Fahrzeuglängsachse angeordnet wird, ist neben ihm Raum genug, um die Ölkühlanlage 9 anzuordnen. Insbesondere in Fig. 3, welche einen Querschnitt durch einen Panzer mit Blick auf den Antriebsaggregateraum darstellt, ist sichtbar, wie die Gasturbine 1 und die Ölkühlanlage 9 mit ihren Längsachsen parallel zueinander und zur Fahrzeuglängsachse über dem quer zur Fahrzeuglängsachse eingebauten Fahr- und Lenkgetriebe 5 angeordnet ist. Weiterhin ist der Fig. 3 zu entnehmen, daß die Abmessungen des Turbinensatzes äußerst gering sind, so daß die gesamte Antriebseinheit des Fahrzeugs wesentlich weniger Platz beansprucht als dies vorher mit einer Brennkraftmachine als Antriebseinheit des Fahr- und Lenkgetriebes der Fall war.

## Ansprüche

1. Antriebseinheit für Landfahrzeuge, insbesondere allseits gepanzerte Kettenfahrzeuge, mit einer Gasturbine (1), bestehend aus einem Gasgenerator und einer nachgeschalteten Nutzturbine, welche mechanisch über eine Antriebsverbindung (8) auf ein Fahr- und Lenkgetriebe (5) wirkt, wobei die Gasturbine (1) in Richtung der Fahrzeuglängsachse angeordnet ist, die Lufteinlaßstutzen (11) nahe an der Oberwand und der Abgasauslaßstutzen (3) nahe an der Heckwand (4) der Fahrzeuges vorgesehen sind und der Gasgenerator eine Antriebsverbindung (10) zu den in dem Fahr- und Lenkgetriebe (5) angeordneten Hilfsaggregaten aufweist, dadurch gekennzeichnet, daß das Fahr- und Lenkgetriebe (5) unterhalb der Gasturbine (1) quer zur Fahrzeuglängsachse angeordnet ist, daß die Antriebsverbindung (10) des Gasgenerators unter Zwischenschaltung einer Kupplung auf dem vorderseitigen Ende des Fahr- und Lenkgetriebes (5), während die Antriebsverbindung (8) der Nutzturbine auf dem heckseitigen Ende des Fahr- und Lenkgetriebes (5) angeordnet ist.

2. Antriebseinheit nach Anspruch 1, dadurch gekennzeichnet, daß die Gasturbinenlängsachse außermittig zur Fahrzeuglängsachse angeordnet ist.

3. Antriebseinheit nach Anspruch 1 oder 2, dadurch gekennzeichnet, daß zwischen dem Gasgenerator und der Nutzturbine eine Kupplung vorgesehen ist.

## Claims

1. A drive unit for land vehicles, the drive unit having a gas turbine (1) and being especially for tracked vehicles armoured on all sides, comprising a gas generator and a downstream drive turbine which acts mechanically on a propelling and steering mechanism (5) by way of a drive connection (8), the gas turbine (1) being arranged in the direction of the longitudinal axis of the vehicle, the air-intake ports (11) being provided close to the upper wall of the vehicle and the exhaust-gas ports (3) close to its rear wall (4), and the gas generator having a drive connection (10) with auxiliary units arranged in the propelling and steering mechanism (5), characterized in that the propelling and steering mechanism (5) is arranged below the gas turbine (1) and transversely of the longitudinal axis of the vehicle, and in that the drive connection (10) of the gas generator is arranged, with a clutch interposed, on the front end of the propelling and steering mechanism (5), where as the drive connection (8) of the drive turbine is arranged at the rear end of the propelling and steering mechanism (5).

2. A drive unit according to claim 1, characterized in that the longitudinal axis of the gas turbine is arranged eccentrically of the longitudinal axis of the vehicle.

3. A drive unit according to claim 1 or 2, characterized in that a clutch is provided between the gas generator and the drive turbine.

## Revendications

1. Ensemble moteur pour véhicules tous terrains, en particulier pour véhicules blindés de toutes parts, comportant une turbine à gaz (1), constituée d'un générateur de gaz et d'une turbine d'exploitation montée à la suite, qui agit mécaniquement par l'intermédiaire d'une connexion motrice (8) sur un mécanisme (5) de propulsion et de direction, où la turbine à gaz (1) est disposée dans le sens de l'axe longitudinal du véhicule, les raccords d'entrée d'air (11) sont prévus à proximité de la paroi supérieure, et la tuyauterie (3) d'échappement des gaz, à proximité de la paroi arrière (4) du véhicule, pendant que le générateur de gaz présente une connexion motrice (10) avec les appareils auxiliaires placés sur les mécanismes (5) de propulsion et de direction, ensemble moteur caractérisé en ce que le mécanisme de propulsion et de direction (5) est placé en-dessous de la turbine à gaz (1), perpendiculairement à l'axe longitudinal du véhicule, que la connexion motrice (10) du générateur de gaz est placée, avec interposition d'un embrayage, sur l'extrémité avant du mécanisme de propulsion et de direction (5), pendant que la connexion motrice (8) de la turbine d'exploitation est placée sur l'extrémité arrière de ce mécanisme (5) de propulsion et de direction.

2. Ensemble moteur suivant la revendication 1, caractérisé en ce que l'axe longitudinal de la turbine à gaz est disposé excentriquement par rapport à l'axe longitudinal du véhicule.

3. Ensemble moteur suivant l'une des revendications 1 et 2, caractérisé en ce que l'on prévoit un embrayage entre le générateur de gaz et la turbine d'exploitation.

1/3

Fig.1

Fig.2

Fig. 3